# EUROPÄISCHE PATENTSCHRIFT

(11) **EP 1 264 116 B1**
(45) Veröffentlichungstag und Bekanntmachung des Hinweises auf die Patenterteilung: **16.07.2003**
(21) Anmeldenummer: 00990809.6
(22) Anmeldetag: 21.12.2000
(51) Int. Cl.: F16D 3/44, B23Q 1/54

(54) **GELENK**
JOINT
ARTICULATION

(30) Priorität: 16.02.2000 DE 10007005
(43) Veröffentlichungstag der Anmeldung: 11.12.2002
(73) Patentinhaber: INA-Schaeffler KG, 91074 Herzogenaurach (DE)
(72) Erfinder: POPP, Stephan, 91448 Emskirchen (DE); DÜRSCHMIED, Frank, 90469 Nürnberg (DE)
(86) Internationale Anmeldenummer: EP0013097
(87) Internationale Veröffentlichungsnummer: WO01061204

(56) Entgegenhaltungen:
- WO-A-99/15802
- US-A- 5 987 726

## Beschreibung

### Anwendungsgebiet der Erfindung

Die Erfindung betrifft ein Gelenk zur Übertragung von Zug- oder Druckkräften mit wenigstens zwei Freiheitsgraden.

### Hintergrund der Erfindung

Derartige Gelenke, d. h. die Führung übemehmende Verbindung zwischen zwei gegeneinander bewegten Maschinenteilen oder Getriebegliedern, mit bis zu fünf Freiheitsgraden, gleichbedeutend mit der Anzahl der möglichen Drehachsen und der möglichen Verschiebungen, sind seit langem in einer Vielzahl von Ausführungen bekannt. Den Freiheitsgrad 2 besitzt beispielsweise ein Drehschubgelenk, das in einer Ebene drehbar und in einer anderen Ebene verschiebbar ist. Nachteilig dabei ist, dass alle bisher bekannten Gelenke mit wenigstens zwei Freiheitsgraden für spezielle Anwendungsfälle nicht einsetzbar sind. Diese betrifft insbesondere den Einsatz in parallel kinematischen Systemen, wo zur genauen Positionierung von Werkzeugen zur Feinstbearbeitung hohe Ansprüche an eine Gelenkverbindung gestellt werden.

### Zusammenfassung der Erfindung

Der Erfindung liegt daher die Aufgabe zu Grunde, ein neuartiges Gelenklager mit wenigstens zwei Freiheitsgraden zu entwickeln, das eine sehr hohe Steifigkeit aufweist, sich kostengünstig fertigen und auch montieren lässt.

Erfindungsgemäß wird diese Aufgabe durch ein Gelenk mit folgenden Merkmalen gelöst:
- einem in seinem Mittelteil verstärkt ausgebildeten zylindrischen Körper, der mit seinen gegenüberliegenden Zapfen schwenkbar um eine Achse X in zwei Aufnahmebohrungen eines Gehäuses über je ein erstes Wälzlager aufgenommen ist,
- einer im zylindrischen Körper angeordneten inneren Laufbahn für ein zweites Wälzlager, die zur Achse X geneigt verlaufend angeordnet ist,
- einem eine äußere Laufbahn des zweiten Wälzlagers bildenden Außenring, der schwenkbar um eine Achse Y angeordnet ist, wobei sich beide Achsen X, Y unter einem Winkel α ≤ 90° schneiden,
- einem an einer Umfangsstelle fest mit dem Außenring verbundenen, die Zug- oder Druckkraft übertragenden Verbindungsglied, dessen Achse Z im Mittelteil des zylindrischen Körpers einen gemeinsamen Schnittpunkt mit den Achsen X und Y aufweist, so dass bei einer Schwenkbewegung des zylindrischen Körpers der Außenring und das mit ihm verbundene Verbindungsglied eine Taumelbewegung ausführen

Eine derart erfindungsgemäß gestaltetes Gelenklager weist durch seinen im Mittelteil verstärkt ausgebildeten zylindrischen Körper eine besonders hohe Biegesteifigkeit auf, die unabdingbar für dessen hochgenaue Anwendung ist. Der zylindrischen Körper lässt sich als Drehteil in maximal zwei Aufspannungen sehr kostengünstig fertigen. Auf Grund seiner wälzgelagerten Teile ist ein solches Gelenk mit ganz geringen Reibungsverlusten behaftet. Auch lässt es sich wegen seiner zusammengesetzten Bauweise einfach fertigen und montieren.

Vorteilhafte Ausführungen der Erfindung sind in Unteranprüchen 2 bis 8 beschrieben.

So ist nach Anspruch 2 vorgesehen, dass das Gehäuse aus zwei voneinander in Richtung der X-Achse beabstandeten, die Aufnahmebohrungen tragenden Seitenteilen besteht, die durch eine Grundplatte miteinander verbunden sind. Ein derart aus drei Teilen bestehendes und zusammengesetztes Gehäuse erlaubt eine besonders einfache und kostengünstige Montage des Gesamtgelenkes.

Nach einem weiteren Merkmal der Erfindung gemäß Anspruch 3 sollen die die Zapfen aufnehmenden ersten Wälzlager als eine Kombination von Radial- und Axiallager ausgebildet sein. Auf diese Weise ist sichergestellt, dass auch bei axial wirkenden Kräften die Leichtgängigkeit des zylindrischen Körpers bei seiner Rotation gegeben ist. Nach Anspruch 4 sollen dabei das Radial- und das Axiallager als ein Nadellager ausgebildet sein, wobei nach Anspruch 5 der Laufring des Radiallagers und die Laufscheibe des Axiallagers durch einen spanlosen Formgebungsvorgang hergestellt sind.

Nach einem anderen Merkmal der Erfindung gemäß Anspruch 6 ist vorgesehen, dass das zweite Wälzlager, welches die auftretenden Zug- oder Druckkräfte aufzunehmen hat, als ein vollrolliges Zylinderrollenlager ausgebildet sein soll, dessen Zylinderrollen gegen ein Verschieben in Richtung der Y-Achse durch zwei im Außenring angeordnete Anlaufscheiben gesichert sind. Diese besonders kompakte Bauweise eignet sich immer besonders dann, wenn hohe Kräfte zu übertragen sind.

Aus Anspruch 7 geht hervor, dass die ersten und das zweite Wälzlager spielfrei vorgespannt sein sollen. Diese Spietfreiheit ist ebenfalls eine unabdingbare Voraussetzung für die Steifigkeit der gesamten Gelenklageranordnung.

Schließlich ist nach Anspruch 8 vorgesehen, dass das erfindungsgemäße Gelenk in einer Parallel Kinematik (PKM) eingesetzt ist. Diese Werkzeugmaschinen einer neuen Generation sind dem Fachmann bereits bekannt und bewegen im Gegensatz zu konventionellen Werkzeugmaschinen geringere Masse. Dies hat zur Folge, dass hohere Stellgeschwindigkeiten gefahren werden, wobei insbesondere die Steifigkeit zwischen Rahmen und Werkzeugaufnahme sehr hoch sein muss. Eine Parallel Kinematik kann aus mehreren Armen bestehen, die einerseits am Rahmen und andererseits an der Werkzeugaufnahme gelenkig befestigt sind. Dabei können die erfindungsgemäßen Gelenke in vorteilhafter Weise eingesetzt werden.

Die Erfindung wird an nachstehendem Ausführungsbeispiel näher erläutert.

### Kurze Beschreibung der Zeichnungen

Es zeigen:
- Fig. 1: einen Längsschnitt durch ein erfindungsgemäßes Gelenk;
- Fig. 2, 3: eine perspektivische Darstellung des Gelenkes in zwei verschiedenen Stellungen und
- Fig. 4: eine schematische Darstellung einer Werkzeugmaschine des Hexapode-Systems.

### Ausführliche Beschreibung der Zeichnungen

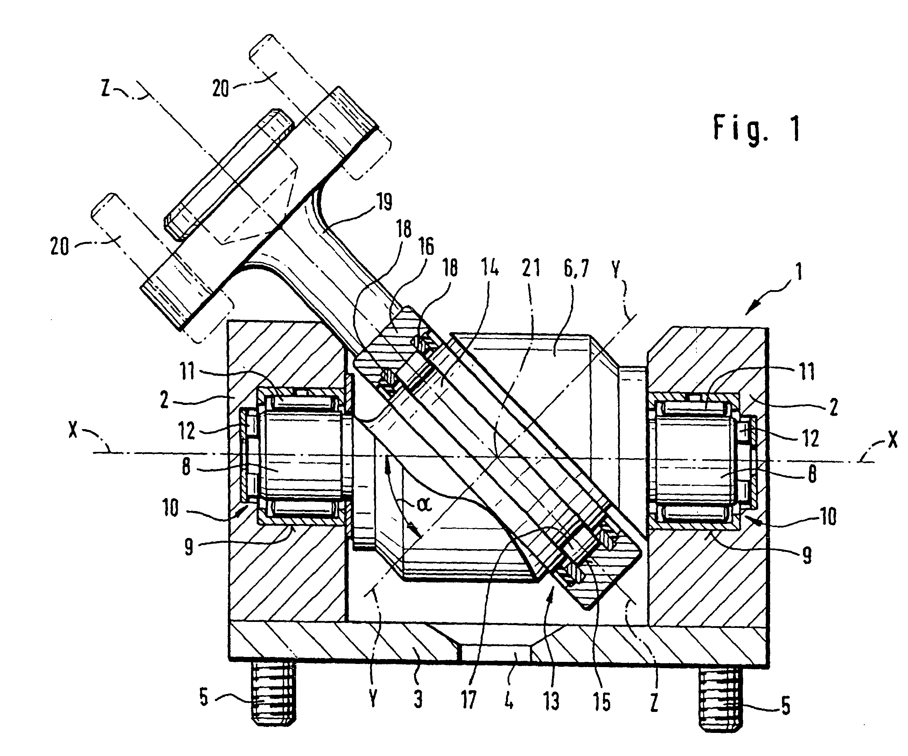

Das in den Figuren 1 bis 3 dargestellte erfindungsgemäße Gelenk weist das Gehäuse 1 auf, das aus den voneinander beabstandeten beiden Seitenteilen 2 besteht, die durch die die Ausnehmung 4 aufweisende Grundplatte 3 miteinander verbunden sind. Das Gehäuse 1 ist mit den die Seitenteile 2 und die Grundplatte 3 durchdringenden Befestigungsschrauben 5 an einer nicht dargestellten Anschlußkonstruktion befestigt. In zwei gegenüberliegenden Aufnahmebohrungen 9 der Seitenteile 2 ist über seine zwei Zapfen 8 der in seinem Mittelteil 7 verstärkt ausgebildete zylindrische Körper 6 drehbar aufgenommen. Der zylindrische Körper 6 ist mit den Zapfen 8 in der Aufnahmebohrung 9 über je ein erstes Wälzlager 10 gelagert, das aus einem Radiallager 11 und einem Axiallager 12 zusammengesetzt ist. Der Mittelteil 7 des zylindrischen Körpers 6 weist die innere Laufbahn 14 des zweiten Wälzlagers 13 auf, die unter einem Winkel geneigt zur Rotationsachse X des zylindrischen Körpers 6 verläuft. Die äußere Laufbahn 15 ist durch den Außenring 16 gebildet, der an einer Stelle seines Umfanges mit dem Verbindungsglied 19 verbunden ist, das über Befestigungsschrauben 20 an einer nicht dargestellten Anschlußkonstruktion befestigbar ist. Die Zylinderrollen 17 des zweiten Wälzlagers 13 sind über im Außenring 16 angeordnete Anlaufscheiben 18 beidseitig gegen axiales Verschieben gesichert. Sämtliche Lager, d. h. die aus Radiallager 11 und Axiallager 12 bestehenden ersten Wälzlager 10 und das zweite Wälzlager 13 sind spielfrei ausgestaltet, so dass ein Lagerspiel vermieden ist. Der Außenring 16 des zweiten Wälzlagers 13 ist um seine Achse Y schwenkbar, die wiederum zur Rotationsachse X des zylindrischen Körpers 6 unter dem Winkel α ≤ 90° verläuft und sich mit dieser im Schnittpunkt 21 schneidet, der gleichzeitig der Mittelpunkt des Mittelteils 7 des zylindrischen Körpers 6 ist. Die Längsachse Z des Verbindungsgliedes 19 trifft sich ebenfalls im Schnittpunkt 21 mit den beiden anderen Achse X und Y. Auf diese Weise ist sichergestellt, dass bei einer Bewegung des Gelenklagers der Außenring 16 des zweiten Wälzlagers 13 und dass an ihm befestigte Verbindungsglied 19 eine Taumelbewegung ausführen.

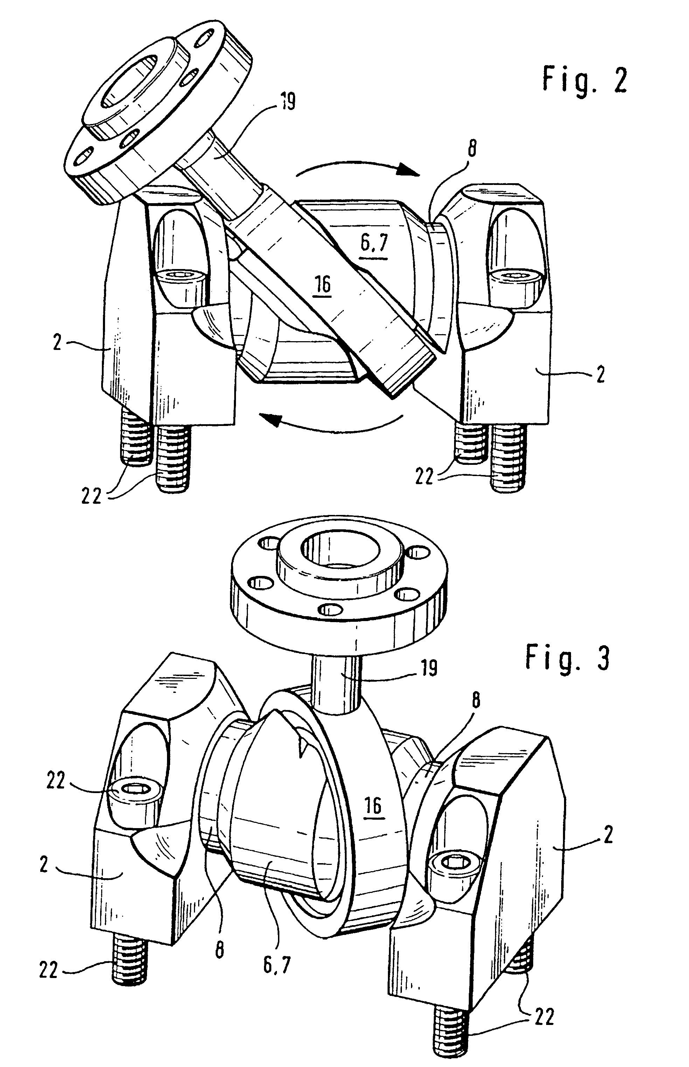

In den Figuren 2 und 3 sind in perspektivischer Darstellung zwei unterschiedliche Stellungen des erfindungsgemäßen Gelenklagers gezeigt, wobei das Gehäuse 1 ohne die Grundplatte 3 dargestellt ist, d. h. die Seitenwände 2 werden direkt mit Hilfe von Befestigungsschrauben 22 an einer Anschlußkonstruktion befestigt. In Figur 2 ist das Gelenk in seiner linken Anschlagstellung gezeigt, d. h. der Außenring 16 ist nach links geneigt und liegt mit seinem oberen Teil fast am linksseitigen Seitenteil 2 an. Schwenkt nun der zylindrische Körper 6 um seine Achse X, so ist nach einer viertel Umdrehung der Zustand, wie in Figur 3 dargestellt, erreicht. Das Verbindungsglied 19 ist dabei in einer geraden Linie bis in die Mitte zwischen den beiden Seitenteilen 2 gewandert. Nach einer weiteren viertel Umdrehung, d. h. insgesamt einer halben Drehung des zylindrischen Körpers 6 liegt auf Grund der geneigt zur X-Achse angeordneten inneren Laufbahn 14 das Verbindungsglied 19 bzw. der Außenring 16 rechtseitig an, d. h. der Außenring 16 ist nach rechts geneigt. Dieser Zustand wäre die nicht dargestellte Spiegelung von Figur 2, wie durch die beiden Pfeile dargestellt. Durch ein Zurückschwenken des zylindrischen Körpers 6, d. h. dieser nimmt die ausgeführte halbe Drehung in umgekehrter Richtung wieder zurück, ist der Ausgangszustand gemäß Figur 1 erreicht.

Die vorstehend beschriebene Bewegung des erfindungsgemäßen Gelenkes ist in vereinfachter Weise derart erfolgt, dass lediglich der zylindrische Körper 6 um seine Achse X geschwenkt ist, während der Außenring 16 nicht um seine Achse Y geschwenkt ist. Es liegt auf der Hand, dass bei einem Einsatz dieses Lagers beide Bewegungen überlagert sind, d. h. einerseits wird der zylindrische Körper 6 um seine Achse X schwenken und andererseits wird gleichzeitig der Außenring 16 des zweiten Wälzlagers 13 um seine Achse Y schwenken, so dass sich eine Taumelbewegung von Außenring 13 bzw. mit ihm verbundenem Verbindungsglied 19 ergibt.

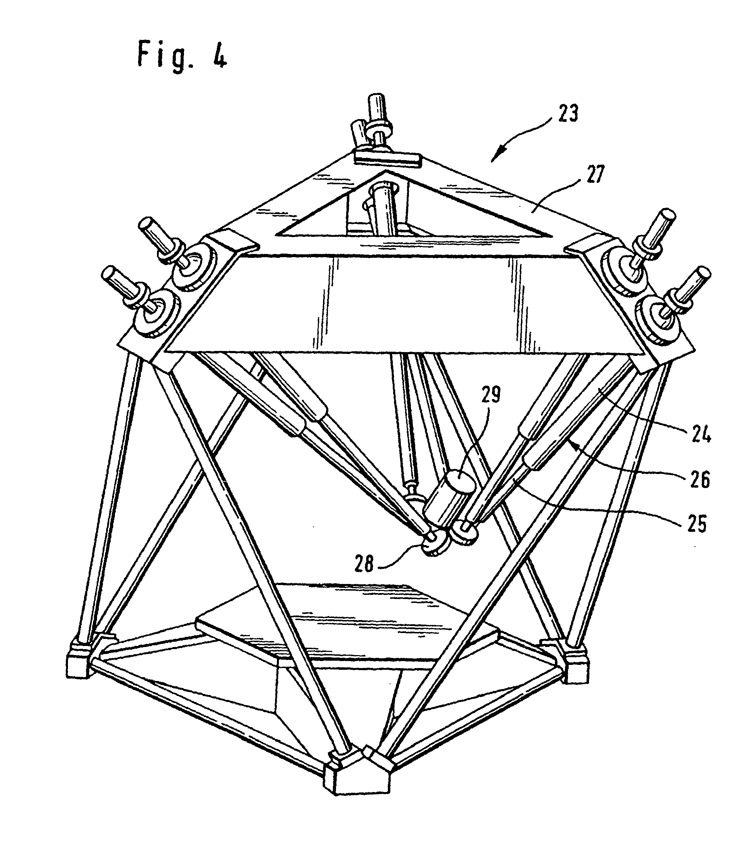

Die in Figur 4 abgebildete Werkzeugmaschine 23 ist mit mehreren je aus in einander angeordneten Rohren 24, 25 gebildeten Teleskoparmen 26 versehen. Diese Teleskoparme 26 sind einerseits am Rahmen 27 und andererseits an der Werkzeugaufnahme 28 befestigt. Die Werkzeugaufnahme 28 ist mit einem nicht näher dargestellten Werkzeug versehen, das von dem Motor 29 angetrieben wird. Durch Ein- bzw. Ausfahren eines oder mehrerer Teleskoparme 26 lässt sich die Werkzeugaufnahme 28 in jede gewünschte Position im Raum bewegen. Die erfindungsgemäßen Gelenke mit zwei Freiheitsgraden können bei der abgebildeten Werkezugmaschine beispielsweise am Rahmen 27 fixiert werden. In Zusammenspiel mit an der Werkzeugaufnahme 28 befestigten Gelenken ist durch deren Steifheit sichergestellt, dass das erfindungsgemäße Gelenk sowohl in Zug- als auch in Druckrichtung beanspruchbar ist, ohne dass unerwünschte Durchbiegungen auftreten.

### Bezugszeichen

- 1: Gehäuse
- 2: Seitenteil
- 3: Grundplatte
- 4: Ausnehmung
- 5: Befestigungsschraube
- 6: zylindrischer Körper
- 7: Mittelteil
- 8: Zapfen
- 9: Aufnahmebohrung
- 10: erstes Wälzlager
- 11: Radiallager
- 12: Axiallager
- 13: zweites Wälzlager
- 14: innere Laufbahn
- 15: äußere Laufbahn
- 16: Außenring
- 17: Zylinderrollen
- 18: Anlaufscheibe
- 19: Verbindungsglied
- 20: Befestigungsschraube
- 21: Schnittpunkt
- 22: Befestigungsschraube
- 23: Werkzeugmaschine
- 24: Rohr
- 25: Rohr
- 26: Teleskoparm
- 27: Rahmen
- 28: Werkzeugaufnahme
- 29: Motor
- X: Schwenkachse
- Y: Schwenkachse
- Z: Längsachse
- α: Winkel

## Patentansprüche

1. Gelenk zur Übertragung von Zug- oder Druckkräften mit wenigstens zwei Freiheitsgraden, das folgende Merkmale aufweist,
- einem in seinem Mittelteil (7) verstärkt ausgebildeten zylindrischen Körper (6), der mit seinen gegenüberliegenden Zapfen (8) schwenkbar um eine Achse X in zwei Aufnahmebohrungen (9) eines Gehäuses (1) über je ein erstes Wälzlager (10) aufgenommen ist,
- einer im zylindrischen Körper (6) angeordneten inneren Laufbahn (14) für ein zweites Wälzlager (13), die zur Achse X geneigt verlaufend angeordnet ist,
- einem eine äußere Laufbahn (15) des zweiten Wälzlagers (13) bildenden Außenring (16), der schwenkbar um eine Achse Y angeordnet ist, wobei sich beide Achsen X,Y unter einem Winkel α ≤ 90° schneiden,
- einem an einer Umfangsstelle fest mit dem Außenring (16) verbundenen, die Zug- oder Druckkraft übertragenden Verbindungsglied (19), dessen Achse Z im Mittelteil (7) des zylindrischen Körpers (6) einen gemeinsamen Schnittpunkt (21) mit den Achsen X und Y aufweist, so dass bei einer Schwenkbewegung des zylindrischen Körpers (6) der Außenring (16) und das mit ihm verbundene Verbindungsglied (19) eine Taumelbewegung ausführen.

2. Gelenk nach Anspruch 1 mit dem Gehäuse (1), das aus zwei voneinander in Richtung der X-Achse beabstandeten, die Aufnahmebohrungen (9) tragenden Seitenteilen (2) besteht, die durch eine Grundplatte (3) miteinander verbunden sind.

3. Gelenk nach Anspruch 1 mit dem die Zapfen (8) aufnehmenden ersten Wälzlager (10), das als ein Radiallager (11) und als ein Axiallager (12) ausgebildet ist.

4. Gelenk nach Anspruch 3 mit dem als Nadellager ausgebildeten Radial- (11) und Axiallager (12).

5. Gelenk nach Anspruch 3 mit einem äußeren Laufring des Radiallagers (11) und einer Laufscheibe des Axiallagers (12), die durch einen spanlosen Formgebungsvorgang hergestellt sind.

6. Gelenk nach Anspruch 1 mit dem zweiten Wälzlager (13), das als ein vollrolliges Zylinderrollenlager ausgebildet ist, dessen Zylinderrollen (17) gegen ein Verschieben in Richtung der Y-Achse durch zwei im Außenring (16) angeordnete Anlaufscheiben (18) gesichert sind.

7. Gelenk nach Anspruch 1 mit erstem und zweitem Wälzlager (10,13), die spielfrei vorgespannt sind.

8. Parallel Kinematik in die ein Gelenk nach einem der Ansprüche 1 bis 7 eingesetzt ist.

## Claims

1. Joint for transmitting tensile or compressive forces with at least two degrees of freedom, which has the following features:
- a cylindrical body (6), reinforced in its central portion (7), which is accommodated with its opposing tappets (8) so as to be pivotable about an axis X in two receiving bores (9) of a housing (1) via a first roller bearing (10).
- an inner track (14) for a second roller bearing (13) arranged inside the cylindrical body (6) and inclined in relation to the axis X,
- an outer ring (16) forming an outer track (15) of the second roller bearing (13), this outer ring being pivotally arranged about an axis Y, the two axes X, Y intersecting an an angle α ≤ 90°,
- a connecting member (19) fixedly connected to the outer ring (16) at a point on the circumference and transmitting the tensile or compressive force, the axis Z of which in the central portion (7) of the cylindrical body (6) has a mutual point of intersection (21) with the axes X and Y, so that when the cylindrical body (6) pivots the outer ring (16) and the connecting member (19) attached thereto perform a wobbling movement.

2. Joint according to claim 1 with the housing (1) which consists of two side portions (2) spaced apart from one another in the direction of the X axis and carrying the receiving bores (9), these side portions being joined together by a base plate (3).

3. Joint according to claim 1, with the first roller bearing (10) accommodating the pins (8), this roller bearing being in the form of a radial bearing (11) and an axial bearing (12).

4. Joint according to claim 3 with the radial (11) and axial bearing (12) constructed as a needle bearing.

5. Joint according to claim 3 with an outer track of the radial bearing (11) and a rotor disc of the axial bearing (12) which are produced by a forging process.

6. Joint according to claim 1 with the second roller bearing (13) which is in the form of a solid-roll cylinder roller bearing the cylinder rollers (17) of which are secured against movement in the direction of the Y axis by two buffer discs (18) disposed in the outer ring (16).

7. Joint according to claim 1 with first and second roller bearings (10, 13) which are pretensioned without play.

8. Parallel Kinematics In which a joint according to one of claims 1 to 7 is used.

## Revendications

1. Articulation pour transmettre des forces de traction ou de compression avec au moins deux degrés de liberté, présentant les caractéristiques suivantes :
- un corps cylindrique (6), renforcé dans sa partie centrale (7), possède deux pivots (8) se faisant face par lesquels il peut tourner autour d'un axe X sur des premiers roulements à rouleaux (10) logés dans deux alésages d'accueil (9) d'un boîtier (1),
- dans le corps cylindrique (6) est réalisé pour un second roulement à rouleaux (13) une piste interne de circulation (14) inclinée par rapport à l'axe X,
- la piste de circulation externe (15) du second roulement à rouleaux (13) est constituée par une bague externe (16) pouvant tourner autour d'un axe Y qui coupe l'axe X sous un angle α ≤ 90°,
- en un point périphérique de la bague externe (16) est solidarisée à celle-ci un organe de liaison (19) transmettant les forces de traction ou de compression et dont l'axe Z coupe à l'intérieur de la partie centrale (7) du corps (6), les axes X et Y en un point de coupe (21) commun, de sorte que quand le corps cylindrique (6) tourne, la bague externe (16) et l'organe de liaison (19) qu'elle porte effectuent un mouvement de mutation.

2. Articulation selon la revendication 1,
**caractérisée en ce que**
le boîtier (1) est composé de deux parties latérales (2) espacées selon la direction de l'axe X, portant les alésages d'accueil (9) et reliées par une plaque de base (3).

3. Articulation selon la revendication 1,
**caractérisée en ce que**
les premiers roulements à rouleaux (10) qui accueillent les pivots (8) sont composés chacun d'un roulement radial (11) et d'un roulement axial (12).

4. Articulation selon la revendication 3,
**caractérisée en ce que**
les roulements radial (11) et axial (12) sont des roulements à aiguilles.

5. Articulation selon la revendication 3,
**caractérisée en ce que**
la bague externe de circulation du roulement radial (11) et le disque de circulation du palier axial (12) sont réalisés par formage sans enlèvement de matière.

6. Articulation selon la revendication 1,
**caractérisée en ce que**
le second roulement à rouleaux (13) est un roulement complet à rouleaux cylindriques, dont les rouleaux (17) sont empêchés de coulisser dans la direction de l'axe Y par deux disques de circulation (18) montés dans la bague externe (16).

7. Articulation selon la revendication 1,
**caractérisée en ce que**
les roulements à rouleaux (10, 13) sont précontraints sans jeu.

8. Cinématique parallèle comportant une articulation selon l'une quelconque des revendications 1 à 7.
